# EUROPEAN PATENT SPECIFICATION

(11) **EP 2 914 756 B1**
(45) Date of publication and mention of the grant of the patent: **28.12.2016**
(21) Application number: 13811249.5
(22) Date of filing: 01.11.2013
(51) Int. Cl.: C21D 9/00, C23C 10/36, C23C 8/26, C23C 10/02, F16B 25/00

(54) **A PROCESS FOR MANUFACTURING A FIXING DEVICE**
VERFAHREN ZUR HERSTELLUNG EINER BEFESTIGUNGSVORRICHTUNG
PROCÉDÉ DE FABRICATION D'UN DISPOSITIF DE FIXATION

(30) Priority: 01.11.2012 GB 201219704
(43) Date of publication of application: 09.09.2015
(73) Proprietor: Excalibur Screwbolts Limited, Hockley SS5 5JU (GB)
(72) Inventor: BICKFORD, Charles, Hockley Essex SS5 5JU (GB); CLEMENT, James, St. Neots Cambridgeshire PE19 2LZ (GB)
(74) Representative: Humphrey-Evans, Edward John
(86) International application number: PCT/GB2013/000469
(87) International publication number: WO 2014/068272

(56) References cited:
- GB-A- 1 002 512
- GB-A- 2 455 533
- US-A1- 2009 266 454

## Description

### Filed of the Invention

The invention relates to a process for manufacturing a fixing device and a fixing device made by such a process. In particular, albeit not exclusively, the present invention relates a fixing device for application in fixing to concrete and like materials/ substrates.

### Background to the Invention

Conventional threaded fixing devices such as screws are difficult to secure in masonry substrates since it is difficult for a conventional thread to find secure location within a bore in such a substrate. Conventional screw thread fixings are accordingly conventionally secured within bores in masonry substrates by first lining the bore with a lining of relatively soft material into which the threaded fixing can cut its own thread, at the same time compressing the lining against the walls of the bore within the masonry substrate. A typical example of such a lining is that sold under the trade mark Rawlplug. Such linings are available in fibrous and plastics material form and in a wide variety of configurations reflecting a very considerable activity in the art over the years to improve upon the security and ease of use of screw threaded fixing devices used with such liners.

Adopting a somewhat similar principle, alternative forms of fixing device are of metallic material and structured so as to be expansible after introduction into a bore in a masonry material whereby compressive forces against or impingement into the internal surfaces of the bore resist withdrawal of the fixing device from the bore. Reflecting similarly substantial activity in the art, a wide variety of such devices is available. For example, various devices of this kind are available under the trade marks Fischer, Hilti and Rawlplug.

Applicant Company has been responsible for providing a number of fastening screws which have a shank provided with sometimes several helical threads which provide self-tapping capacity for the coarse deep thread. For example, US5531553 discloses a masonry fixing device which comprises a steel shank which in the form of the blank is right circular cylindrical form. A ridge-groove-ridge configuration extends helically along the lower portion of shank and comprises a pair of parallel opposed ridges upstanding from an adjacent land. Each ridge defines with the adjacent ridge a groove. At least the forward end of the lower portion of shank is configured so as to provide a self-tapping facility. In use, the fixing device is introduced into a pre-drilled bore in a masonry substrate such as brickwork by turning so as to form a thread on the interior walls of the bore. GB2455533, also in the name of Applicant teaches of a fixing device having three parallel threads of equal height, which can be heat treated.

In order to maintain the integrity of a structure it is important that a fixing does not corrode. Fixings employed in construction are frequently exposed to inclement conditions, by way of being exposed in all sorts of weather, attached to damp or wet structures, subject to variations to temperatures and humidity. Corrosion is a normal, natural process. Corrosion can seldom be totally prevented, but it can be minimized or controlled by proper choice of material, design, coatings, and occasionally by changing the environment. Various types of metallic and non-metallic coatings are regularly used to protect metal parts from corrosion. The use of linings can affect corrosion - and not necessarily for the better.

Modern and traditional construction fastening bolts are made from a variety of steels which are manufactured to increase strength. Presently extreme endurance fastening bolts are manufactured with boron steel, which are cold forged, thread rolled and then subjected to a heat treatment and yellow passivation. Boron steels possess hardenability equivalent to that of much higher carbon steels and more expensive low alloy heat treatable steels. Tempering, following oil or water quenching after forming, toughens boron steels. The addition of only 0.001-0.003% soluble boron to a suitably protected base steel can produce an increased hardenability compared to that obtained by additions of about 0.5% manganese, chromium or molybdenum, but with little effect on the as-rolled, normalised or annealed strength. In addition, during the hardening process scaling is formed when hot boron steel reacts with the oxygen in the air.

There are a number of problem areas associated with the manufacture and subsequent use of hardened boron steel, namely, the hardening process and the corrosion protection. Boron steel lacks the Zinc coating that HSS steels have for the corrosion protection. The application of coatings to enhance the surface resistance coating of boron steels has tended to result in a reduced hardness, with annealing taking place when heated with protective coatings, which effect is notable especially on cold worked steels. This market is becoming increasingly competitive and there is an increasing need for fixings to become cheaper whilst providing good corrosion protection.

Certain types of stainless steels have been found not to be suitable for high tensile fixings since some grades have been found to be susceptible to stress corrosion cracking, which is an insidious type of failure. Stress corrosion cracking can occur without an externally applied load or at loads significantly below yield stress. Thus, failure can occur without significant deformation or obvious deterioration of the component. Stress corrosion cracking is a failure mechanism that is caused by environment, susceptible material, and tensile stress. Whilst all metals are susceptible to stress corrosion cracking in the right environment, stainless steel is well known for stress corrosion cracking problems. Ferritic stainless steels generally have better engineering properties than austenitic grades, but have reduced corrosion resistance, because of the lower chromium and nickel content. They are also usually less expensive. Martensitic stainless steels are not as corrosion-resistant as the other two classes but are extremely strong and tough, as well as being highly machinable, and can be hardened by heat treatment.

Presently, Applicant manufactures fixings from a grade of steel containing Boron. Once cold forged and thread rolled it is subjected to heat treatment and surface finish. The standard finish is Bright Zinc plate plus yellow passivation. This finish is good for 100 hours of salt spray testing. Salt spray test is a common test for various types of all metal coating, plating, and surface finishing in military, marine and aerospace engineering. A typical salt spray test for this would be set in the region of 100 hours. A 24 hours salt spray test is considered by some to be the equivalent to 10-15 years for 304 Stainless Steel, but the correlation of such tests is not particularly good; it is best to consider salt spray testing as a screening test to confirm that a product is good for a particular duration. The environment around the part also matters: if the part will see physical damage, heat, water, and/or salt, then the finish will need to be improved.

Notwithstanding the above there is an increasing tendency for requirements in large construction projects for fixings to exceed certain standards, such as the corrosivity category C5-M standard - a very severe (marine) atmospheric-corrosivity category, corresponding to exterior coastal and offshore areas with high salinity or interior buildings and other areas with almost permanent condensation and with high pollution. This corrosion resistance category C5, is the toughest standardised environmental condition with respect to corrosion.

Material surface plays a key role to control the service life of materials that is deteriorated by the environmental attacks, especially corrosion and wear. Annually, a large number of economy losses in various industries come from the corrosion and wear damages on machines and components. It is known to apply zinc based coatings to hardened fasteners, with thick coatings (80- 100µm) being applied for long term outdoor use and thinner coatings, (40-60 µm) being applied for less arduous conditions. Such coatings, however, are liable to scratching and ultimate degradation of the fasteners. Various systems across the world employ diffusion coatings with a particular emphasis on hardening of the material, but this does not necessarily provide a high degree of corrosion resistance and vice versa. US2009266454 in the name of Bodycote Warmebehandlung GmbH, teaches of a method of diffusion zinc coating.

### Object of the Invention

The present invention therefore seeks to provide a fixing device for fixing to concrete, other like substrates which overcomes, or at least reduces some of the above-mentioned problems of the prior art. The present invention also seeks to provide a fixing device which has enhanced corrosion resistance.

### Statement of Invention

Accordingly, in a general aspect, the invention provides a process for manufacturing a fixing device for fixing to concrete and like substrates, the process comprising:
a) selecting a heat treatable steel for forming the fixing;
b) rolling the steel to form a fixing product;
c) applying a nitriding process so as to penetrate the surface of the steel, whereby to create a surface skin; and,
d) applying a Sheradizing diffusion process so as to increase corrosion resistance.

The present invention thus provides a specialised hardening and controlled corrosion protection treatment. The hardening applied by the nitriding process can be applied by a number of known nitriding processes. Applicants have determined that subsequent to the nitriding process, diffusion of zinc powders, the powder size being in the range of 5 - 80µm, creates a superb corrosion resistance, and during which, by that addition of further powders selected from a range including zinc, tin, iron, aluminium, magnesium, can provide further advantages.

This development on the traditional nitriding treatment is designed to give a hard resultant surface condition that readily accepts the levels of zinc diffusion required by the Sheradizing process, performed in a rotating barrel, conveniently in a non-oxidising atmosphere, conveniently a nitrogen atmosphere.

The conversion of the steel surface layer into a zinc rich surface layer happens at the atomic level.

Conveniently, the steel is 34CrMo4 steel, preferably having a low silicon content. Unlike plating or coating, the finish is not subject to flaking, peeling, wear-off from rubbing (as when employed as a fastener), or rust when scratched.

Preferably the steel is rolled in a cold-forming die comprising first and second die members; each die member being arranged with respect to the other die member such that grooves defined in a first die member are positioned such that, in use, the dies are reciprocated in parallel planes with respect to each other the steel is rolled whilst the die members are brought together in proximity, whereby the corresponding upstanding members in the steel mate with corresponding grooves in the second die member.

The Sheradizing diffusion process comprises the heating of the fixings are heated together with a zinc powder, with the powder size being in the range of 5 - 80µm, whereby zinc-alloy is formed in a diffusion process to markedly provide a significant increase in corrosion resistance.

The Sheradizing diffusion process can be performed over a sufficient period of time to ensure that from the surface, inward to the core, distinct regions - commonly referred to as diffusion layers of zinc-iron alloy.

The Sheradizing diffusion process can be performed at temperatures of between 340 and 500°C for a period of between 30 minutes and 180 minutes.

The Sheradizing diffusion process can be performed at temperatures below 300°C, for a period of between 30 minutes and 360 minutes, where the zinc powder sublimates.

The corrosion proofing process provides a zinc-iron surface alloy. The corrosion proofing process can comprise heating zinc powder at a temperature between 340 and 500°C. Alternatively, the corrosion proofing process comprise sublimating zinc powder at a temperature between 200 and 300°C. Applicants have extensive test results indicating that the particular process routes provide particular long life indications for superior hardened materials, as compared to traditional stainless steels, including marine grade stainless steels.

In accordance with a further aspect of the invention, there is provided a fixing device manufactured in accordance with the preceding paragraphs.

### Brief Description of the Figures

For a better understanding of the present invention, reference will now be made, by way of example only, to the Figures as shown in the accompanying drawing sheets, wherein:-
Figure 1 is a diagram showing a fixing device according to one embodiment of the present invention;
Figure 2 is a diagram showing a fixing device according to second embodiment of the present invention;
Figure 2a shows an installed screw in accordance with tie invention in a masonry substrate;
Figure 3 shows two die parts facing each other;
Figure 4a & 4b detail features of the die parts in detail;
Figures 5a and 5b show sample bolts prior to salt spray testing;

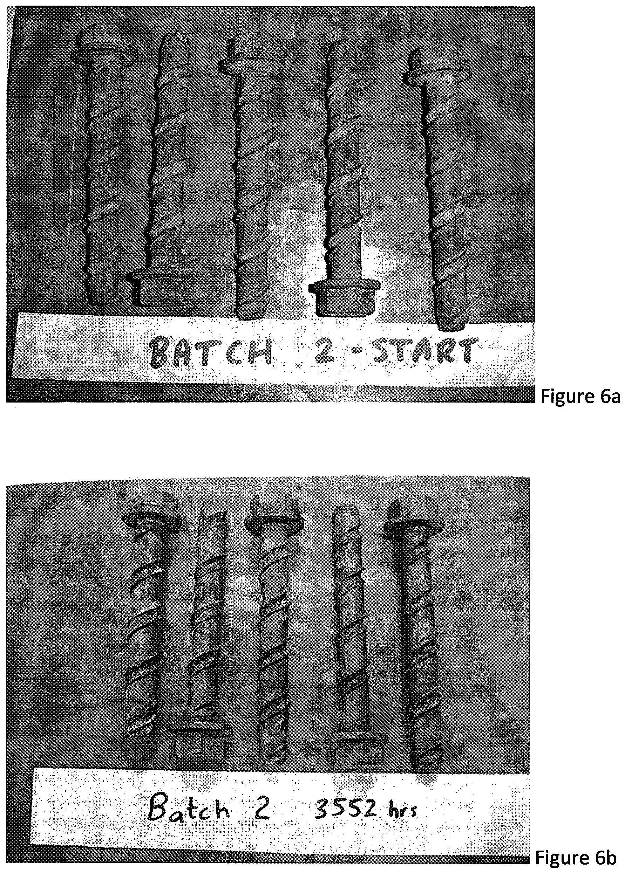

Figures 6a and 6b show sample bolts after 3250 hours of salt spray testing; and

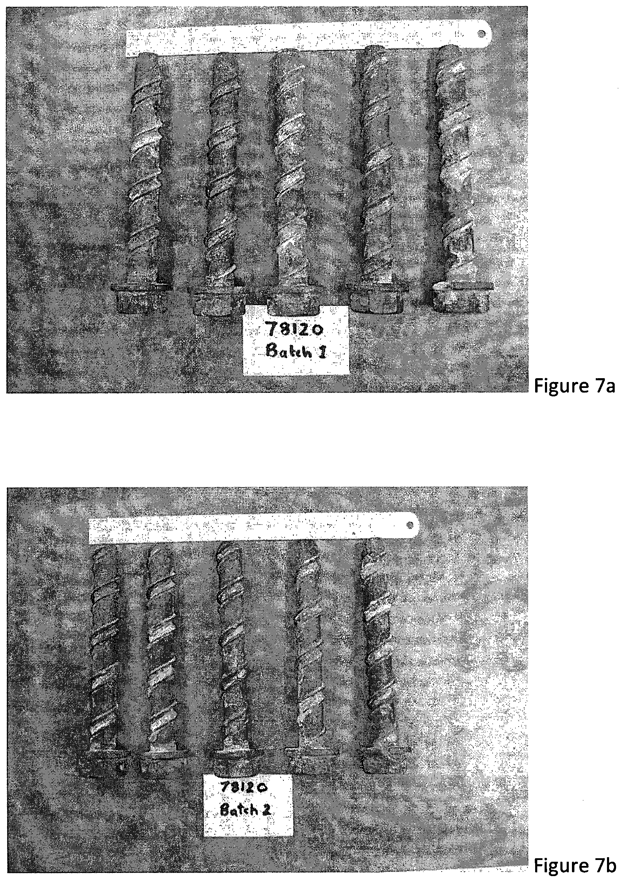

Figures 7a and 7b show sample bolts at the end of the salt spray test.

### Detailed description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

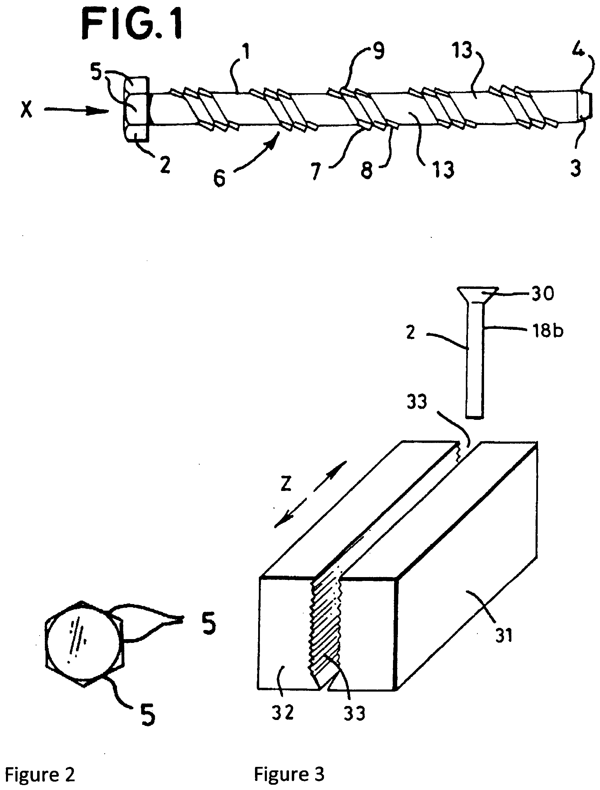

In order to explain the invention in detail, reference shall now be made to a screwbolt manufactured in steps according to the invention. In a brief overview of one embodiment of the present invention, there is shown in Figure 1 a fixing device. The same numbering is used throughout the Figures for the same features, where appropriate.

The fixing devices shown in Figures 1, 2 and 2a are designated generally by the reference numeral 1 (and the same applies to Figure 2).

The fixing device shown in Figure 1 comprises (and similarly in Figure 2) a steel shank 2 of solid right circular cylindrical configuration comprising a top section 3 and a bottom or bone-entry section 4. Bottom section 4 has a groove 5 formed in the surface of the blank shank by cold thread rolling. Groove 5 has a helical configuration and extends spirally around the circumference of the bottom section 4 of shank 2 and is co-extensive longitudinally with that section.

Groove 5 is defined between two parallel marginal ridges 6 and 7 (one of which is absent in favour of one ridge and a deeper groove in the case of Figure 8), formed of shank material displaced from the groove 5 by the plastic deformation which occurs during thread rolling.

Top section 3 of shank 2 is formed with a conventional male screw thread 8 to enable threaded engagement of articles to the fixing element 1 when the fixing element 1 is secured in a masonry structure.

The axial extremities of the shank 2 are formed having regard to the practicalities of the fixing device 1 in use. Thus, for example, the extremity or the bottom portion 4 of shank 2 has a frustoconical configuration to assist bore entry of that extremity. The extremity of the top portion 3 of shank 2 has a domed configuration and is provided with a screwdriver engagement slot, cross-recess, hexagon or square drive (not shown) or screw head enlargement such as one configured with a countersink.

It will be noted that a land 9 is provided between the turns of the ridge-groove-ridge configuration. In the embodiment shown in Figure 1, the land has a width between turns as measured axially of the shank 2 of 7 mm. The shank land diameter in the example depicted is 10.4 mm and the pitch of the groove 5 is 11 mm, the helix angle of the spiral being 25°. The groove depth relative to the land level is 0.5 mm and the ridge height relative to the land level is 0.5 mm. Of course, fixing devices conforming generally to the embodiment described may be configured with different values for one or more of the above parameters (e.g. land width 10 mm, groove pitch 11 mm, helix angle 30° and ridge height 1.0 mm). Turns 6(a) and 7(a) of ridges 6 and 7 are configured by means not shown to provide a self-tapping capacity in a masonry structure.

The fixing device embodiment shown in Figure 2 is broadly similar to that shown in Figure 1. However, in this embodiment the thread represented by the ridge-groove-ridge turns is much coarser and the in-bore extremity of the shank 2 is slotted by means of slot 10 to provide for self-tapping. The device of Figure 1a is preferred over that of Figure 1, for particular circumstances.

Threaded upper section 3 has a flat top provided with screwdriver engagement slot 11. The remaining features of the fixing device shown in Figure 2 will be readily understood from the Figure itself, in comparison with Figure 1. The end 3 of the shank 1, opposed to the head 2, is formed as a gimlet or cone point, this is to assist in the insertion of the tip of the shank into a substrate without the need for a pre-formed hole, or bore. This enables the fixing device to be self-tapping.

Figure 2a shows diagrammatically a masonry substrate 12 whose surface 13 is performed by a right circular cylindrical bore 14 drilled into the masonry substrate 12 using a low speed power driven masonry drill bit without hammer action. In use of fixing devices according to the invention, the first stage in procedures to install the fixing device in a masonry structure is to drill a bore such as that indicated by reference numeral 14

The thread-rolling station shown in Figure 3 comprises a fixed die 31 and a displaceable die 32. The two dies are spaced apart to form jaw 33, the gap therebetween being equal to the core diameter of the product being rolled. Die 32 is displaceable in a reciprocating fashion according to the arrow Z shown in Figure 3. In use, headed blank 18b is inserted into jaw 33 and thus between the fixed and moving dies 31, 32 by manual or mechanical means (e.g. a mechanical feed-finger) as is known in the thread-rolling art. The vertical position of the blank in relation to the fixed and moving die is governed by a work rest on which the blank 18b rests prior to introduction to the dies by the feed-finger. In accordance with the operational sequence, the moving die first moves clear of being parallel with the fixed dye 31 in the direction of arrow C. Blank 18b is then transferred by the feed-finger into the work rest and pushed against and between the leading edge of moving die 32 and the back edge of fixed die 31. The reciprocating action of the moving dye 32 then carries the blank 18b between them. During this time, the blank 18b is plastically deformed to the face of the dies as the blank rolls along the faces thereof. This gives rise to formation of the helical bore engagement configuration 6 shown in the embodiments in Figures 1 - 2a.

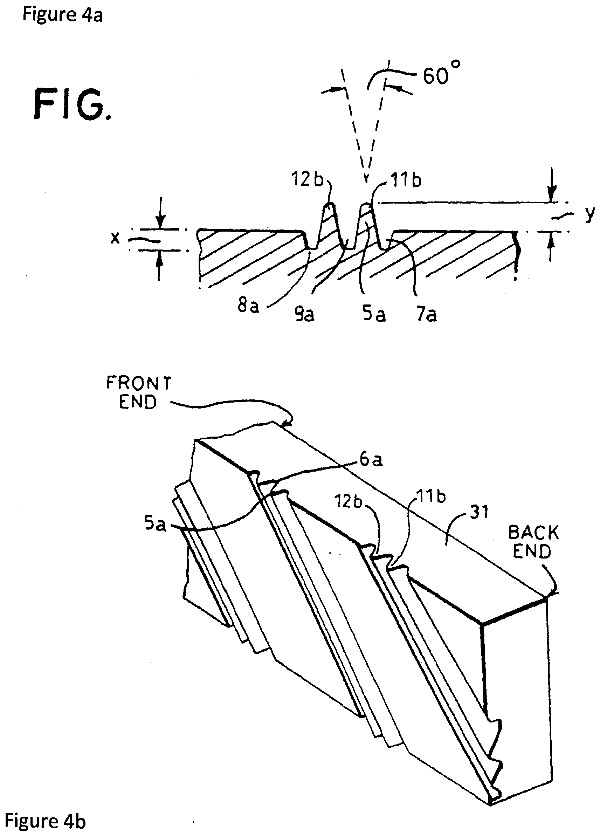

Figures 4a and 4b relate to surface detail of the die surfaces. Die grooves corresponding to ridges 6 and 7 on the fixing are shown at 6a and 7a in Figure 4a whilst die ridge corresponding to device groove 5 are depicted at 5a in Figures 4a and 4b.

Once a fixing has been formed in shape, further surface treatments can be applied. The fixing is subjected to a two stage hardening process, comprising an initial hardening and tempering process followed by a secondary, nitriding hardening process.

The hardening and tempering process can be performed by a neutral hardening, which process shall now be described - although other hardening and tempering processes can also be employed:
Provides parts with an optimal combination of high strength, toughness and temperature resistance.

In neutral hardening processes, the chemical composition of the steel surface of the parts is not intended to be changed during the process. Direct quench hardening in oil is then performed which is the most common practice for hardening of steel. The first step is to heat up in stages to the hardening temperature which is 830 - 870°C. At a temperature above 730°C a transformation of the microstructure into austenite takes place.

The second step is to hold at this hardening, austenitising temperature to simultaneously fully equalise the temperature of the parts, and transform the microstructure into austenite, which provides a reduction in the specific volume.

The third step is quenching the part direct from the austenitising temperature in a cold medium. This kind of quench medium is oil. The quenching speed must be high enough to prevent the material from transforming back into the original soft structure and is quite rapid for small piece parts such as fixings, although consideration must be give n to applying the process too rapidly.

Nitriding imparts a high surface hardness which promotes high resistance to wear, scuffing, galling and seizure. Fatigue strength is increased mainly by the development of surface compressive stresses and nitriding is employed for a range of applications including motor vehicle engine parts such as gears, crankshafts, camshafts, cam followers, valve parts.

Gas nitriding is a low temperature (typically 520°C/970°F), low distortion "thermochemical" heat treatment process carried out to enhance the surface properties of finished or near finished ferrous components. The layer usually consists of two zones - the compound layer (white layer) which can be a cubic or hexagonal nitride and the diffusion layer below with dissolved nitrogen and hard nitride precipitations. The compound layer on the surface of the parts is responsible for the major benefit of high resistance to wear, scuffing, galling and seizure. The diffusion layer contributes improved fatigue strength and works as a support for the hard compound layer. By controlling and adjusting the process atmosphere, the constitution of the layer can be influenced from thin compound layers for fatigue strength improvement to thick nitrogen and carbon rich compound layers in case of gaseous nitrocarburising and post oxidation if good wear and corrosion resistance is desired.

In plasma nitriding, the reactivity of the nitriding media is not due to the temperature but to the gas ionized state. In this technique intense electric fields are used to generate ionized molecules of the gas around the surface to be nitrided. Such highly active gas with ionized molecules is called plasma, naming the technique. The gas used for plasma nitriding is usually pure nitrogen, since no spontaneous decomposition is needed (as is the case of gas nitriding with ammonia). There are hot plasmas typified by plasma jets used for metal cutting, welding, cladding or spraying. There are also cold plasmas, usually generated inside vacuum chambers, at low pressure regimes. Plasma nitriding is an expensive process and accordingly tends not to be commonly deployed.

In a final stage, the processing of the present invention is completed by the performance of a variant of a Sheradizing process, wherein the fixings are heated together with a zinc powder, whereby zinc-alloy is formed in a diffusion process to markedly provide a significant increase in corrosion resistance. The powder can be provided in a rotating barrel.

At temperatures of 380°C and above, in presence of zinc powder, zinc reacts with iron oxides. Accordingly, the iron surface is deoxidized and "cleaned", followed by the zinc diffusing into the surface. Conveniently, to prevent substrate oxidation, the reaction barrel is has a non- oxidising atmosphere - nitrogen can conveniently be employed.

Preferably, the process is performed over a sufficient period of time to ensure that from the surface, inward to the core, distinct regions - commonly referred to as diffusion layers - of zinc-iron alloy are produced, each diffusion layer being harder and more corrosion resistant, noting that the material of the fastener is treated rather than coated as such. The process can conveniently be performed in a rotating barrel arrangement at elevated temperatures of between 340 and 500°C. The diffusion process can be performed at reduced temperatures, i.e. at temperatures below 300°C where the zinc powder sublimates, penetrating the steel structure to form zinc-iron alloy i.e. the steel surface layer is converted into a zinc rich surface layer, at the atomic level. Typical process times being of the duration of 30 minutes to two hours, with lower temperature procedures taking longer for the process to take place to achieve a desired diffusion depth. Coverage of the product is effectively all-over, without any "bald" patches due to hanging supports as in other types of coating systems, since the products that are treated are provided in a rotating barrel, within the predominantly zinc based composition.

The coating powder can comprise a number of additives: further powders selected from a range including zinc, tin, iron, aluminium, magnesium, can provide further beneficial properties in addition to the general corrosion resistance, for example by way of accelerating the rate of diffusion and thus depth of diffusion layer. These powders can be provided in a range of percentages from 0.1 - 5% of the overall powder weight, with the powder size being in the range of 5 - 80µm. Further additives may be employed, for example, clay materials, such as kaolin (Al₂O₃ • 2SiO₂) which is typically available with sizes of 10µm or less and which is believed to help improve an evenness of coating. The kaolin powders can be provided in a range of percentages from 0.1 - 2% of the overall powder weight.

34CrMo4 Alloyed steel is a heat treatable steel with a typical tensile strength of 800 - 1100 N/mm². A typical composition of 34CrMo4 in percentage terms is as follows: C 0,34 Si 0,25 Mn 0,70 Cr 1,10 Mo 0,25 S <0,035. The steel is easily worked in a number of processes such as hot forging/hot rolling + annealing/normalizing + tempering/quenching + tempering. Additionally, 34CrMo4 steel provides sufficient strength for fixings, as can be determined from the table below:

| Diameter (mm) 0.2 % | proof stress (N/mm²) | Tensile strength (N/mm²) |
|---|---|---|
| up to 16 | 785 | 980 - 1180 |
| 17 - 40 | 665 | 880 - 1080 |
| 41 - 100 | 560 | 780 - 930 |
| 101 - 160 | 510 | 740 - 890 |
| 161 - 250 | 460 | 690 - 840 |

As will be appreciated, other heat treatable steels can be employed. Fasteners made in accordance with the present invention have been manufactured form this steel, since it provides a readily available rolled bar (and other configurations) in a variety of sizes. Reference may be had to number of specification sheets.

Applicants have had independent test results in respect of salt spray testing to the UK Water Industry Specification for anti-corrosion coatings on threaded fasteners, WIS 4-52-03:1994 Issue 1. With reference to Figures 4a, 4b, two sets of samples of un-used bolts, randomly selected form a stock of 4000 bolts were placed into a salt spray cabinet to the above referenced standard. All samples were subjected to thermal shock, resistance to damage and then salt spray testing. To perform the thermal shock treatment, all test pieces were placed in an oven at 100°C for one hour in air and air cooled. With regard to the resistance to damage test, all test pieces were subjected to the procedure described in WIS 4-52-03:1994 Issue 1 Appendix C to evaluate their resistance to damage as a precursor to salt spray testing, effectively to create an area of artificial damage. No visible effect was produced on any sample bolt as a result of this procedure. The salt spray testing was performed in a salt spray cabinet under the following conditions:
Salt solution concentration: 5%
Chamber temperature: 35 ±2 °C
Air circulation in the chamber: effectively zero
Fall out rate: 1-3ml/h/80cm2
pH of fall out solution: 6.5 - 7.2
Salt solution SG: 1.027

The above conditions were stabilized for two hours prior to introducing the samples. The samples were carefully cleaned using demineralised water and a mild solvent. The samples were introduced in a horizontal orientation close to the upper part of the cabinet. The temperature, salt fall out rate, salt pH and salt specific gravity were monitored as the test progressed as follows:

**The following table summarizes the sample of the data**

| **Stage** | **Inspection frequency, Hours** | **Temperature, °C** | **Fall out, ml/h/80cm2** | | **pH** | **SG, g/cc** |
|---|---|---|---|---|---|---|
| **1** | 100 | 35 | 2.33 | 2.50 | 7.1 | 1.029 |
| **1** | 300 | 35 | 2.43 | 2.45 | 7.0 | 1.024 |
| **1** | 500 | 35 | 2.41 | 2.54 | 7.1 | 1.026 |
| **1** | 1000 | 35 | 2.44 | 2.55 | 7.1 | 1.029 |
| **2** | 1250 | 35 | 2.56 | 2.55 | 6.8 | 1.023 |
| **2** | 1500 | 35 | 2.50 | 2.48 | 7.1 | 1.025 |
| **2** | 2000 | 35 | 2.44 | 2.45 | 7.1. | 1.023 |
| **2** | 3000 | 35 | 2.45 | 2.53 | 7.0 | 1.023 |
| **2** | 3250 | 35 | 2.43 | 2.46 | 7.1 | 1.024 |
| **2** | 3500 | 35 | 2.46 | 2.44 | 7.1 | 1.023 |
| **2** | 3750 | 35 | 2.36 | 2.34 | 7.0 | 1.024 |
| **2** | 4000 | 35 | 2.41 | 2.45 | 6.9 | 1.025 |
| **3** | 4500 | 35 | 2.33 | 2.37 | 7.0 | 1.025 |
| **3** | 5000 | 35 | 2.45 | 2.46 | 7.1 | 1.027 |
| **3** | 5500 | 35 | 2.46 | 2.44 | 6.9 | 1.027 |
| **4** | 6000 | 35 | 2.34 | 2.36 | 7.1 | 1.026 |
| **4** | 6200 | 35 | 2.35 | 2.33 | 7.0 | 1.026 |

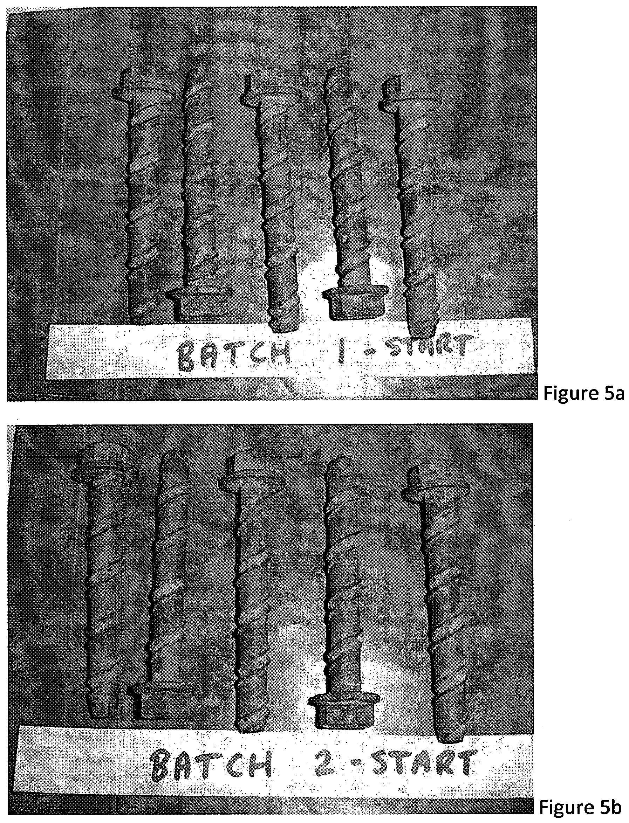

Note that after trials and re-testing the surface hardness specification for the fixings made in accordance with the present invention provided a figure of 580-600hv. Figures 5a and 5b shows sample bolts as received, having been divided into first and second sample comprising a first sample group of un-used bolts and a second sample of bolts that have been used for a single fastening. Following a review of the bolts mid-way and at the end of the salt spray test, the process in accordance with the invention can be confirmed as being extremely satisfactory. The following general observations regarding the samples were presented by the independent testing body (MIS Mechanical Limited of Kestrel Park, Manchester, United Kingdom): After 3552 hours batches 1 and 2 exhibited only very light staining with salt deposits. After 6200 hours batches 1 and 2 exhibit a very low level of corrosion in some of the threads (<5% of the surface), and traces of salt deposit.

It will be appreciated from the foregoing that the invention provides a realisable and controllable systems and method of providing fixings with high tensile strengths that are impervious to corrosion as is anticipated to occur in a typical fixing over several tens of years. The method applies certain known techniques in new processes to provide significant advantages in fixings over known materials, without resorting to the use of boron alloying processes as is known and to provide significant improvements in corrosion resistance.

It will also be appreciated that although only one particular embodiment of the invention has been described in detail, various modifications and improvements can be made by a person skilled in the art without departing from the scope of the present invention.

## Claims

1. A process for manufacturing a fixing device for fixing to concrete and like substrates, the process comprising:
a) selecting a heat treatable steel for forming the fixing;
b) rolling the steel to form a fixing product;
c) applying a nitriding process so as to penetrate the surface of the steel, whereby to create a surface skin; and,
d) applying a Sheradizing diffusion process so as to increase corrosion resistance.

2. A process according to claim 1, wherein the steel has a low silicon content.

3. A process according to claim 1, wherein the steel is 34CrMo4 steel.

4. A process according to claim 1, wherein the steel is rolled in a cold-forming die comprising first and second die members; each die member being arranged with respect to the other die member such that grooves defined in a first die member are positioned such that, in use, the dies are reciprocated in parallel planes with respect to each other the steel is rolled whilst the die members are brought together in proximity, whereby the corresponding upstanding members in the steel mate with corresponding grooves in the second die member.

5. A process according to claim 1, wherein the nitriding process comprises a gas nitriding process conducted at a temperature about 520°C, to provide a low distortion "thermochemical" heat treatment process.

6. A process according to claim 1, wherein the nitriding process comprises a plasma nitriding process wherein intense electric fields are used to generate ionized molecules of the gas around the surface to be nitride, the reactivity of the nitriding media arising from the gas ionization.

7. A process according to claim 1, wherein the Sheradizing diffusion process comprises the heating of the fixings are heated together with a zinc powder, with the powder size being in the range of 5 - 80µm, whereby zinc-alloy is formed in a diffusion process to markedly provide a significant increase in corrosion resistance.

8. A process according to claim 7, wherein the Sheradizing diffusion take place in a rotating barrel.

9. A process according to claim 7 or 8, wherein the Sheradizing process is performed in a non-oxidising atmosphere.

10. A process according to claim 9, wherein the non-oxidising atmosphere comprises nitrogen.

11. A process according to any one of claims 7 - 10, wherein the Sheradizing diffusion process is performed over a sufficient period of time to ensure that from the surface, inward to the core, distinct regions - commonly referred to as diffusion layers of zinc-iron alloy are produced.

12. A process according to any one of claims 7 - 11, wherein the process is performed at temperatures of between 340 and 500°C for a period of between 30 minutes and 180 minutes.

13. A process according to any one of claims 7 - 11, wherein the diffusion process is performed at temperatures below 300°C, for a period of between 30 minutes and 360 minutes, where the zinc powder sublimates.

14. A process according to any one of claims 7 - 13, wherein the coating powder can comprise a number of additives, selected from a range including zinc, tin, iron, aluminium, magnesium, whereby to provide further beneficial properties, said powders being provided in a range of percentages from 0.1 - 5% of the overall powder weight, with the powder size being in the range of 5 - 80µm.

15. A process according to any one of claims 7 - 13, wherein the coating powder can comprise a clay material, such as kaolin (Al₂O₃ • 2SiO₂) with powder size of about 10µm.

16. A fixing device manufactured in accordance with any one or more of claims 1 - 15.

## Patentansprüche

1. Verfahren zur Herstellung einer Befestigungsvorrichtung zur Befestigung in Beton oder ähnlichen Unterlagen, wobei das Verfahren umfasst:
a) Auswählen eines Vergütungsstahls zur Ausbildung der Befestigung;
b) Walzen des Stahls, um ein Befestigungsprodukt zu bilden;
c) Anwenden eines Nitrierprozesses, um in die Oberfläche des Stahls einzudringen, wodurch eine Oberflächenhaut erzeugt wird; und
d) Anwenden eines Diffusionsverzinkungsprozesses, um die Korrosionsbeständigkeit zu erhöhen.

2. Verfahren nach Anspruch 1, wobei der Stahl einen niedrigen Siliciumanteil aufweist.

3. Verfahren nach Anspruch 1, wobei der Stahl 34CrMo4-Stahl ist.

4. Verfahren nach Anspruch 1, wobei der Stahl in einem Kaltumformungswerkzeug gewalzt wird, das ein erstes und ein zweites Formelement umfasst; wobei jedes Formelement in Bezug auf das andere Formelement so angeordnet wird, dass Nuten, die in einem ersten Formelement definiert sind, so positioniert werden, dass die Formwerkzeuge im Gebrauch in parallelen Ebenen in Bezug aufeinander hin und her bewegt werden, der Stahl gewalzt wird, während die Formelemente einander angenähert werden, wobei die entsprechenden hochstehenden Elemente im Stahl mit entsprechenden Nuten im zweiten Formelement zusammenpassen.

5. Verfahren nach Anspruch 1, wobei der Nitrierprozess einen Gasnitrierprozess umfasst, der bei einer Temperatur von etwa 520 °C durchgeführt wird, um einen verzerrungsarmen "thermochemischen" Wärmebehandlungsprozess bereitzustellen.

6. Verfahren nach Anspruch 1, wobei der Nitrierprozess einen Plasmanitrierprozess umfasst, wobei starke elektrische Felder verwendet werden, um ionisierte Moleküle des Gases um die zu nitrierende Oberfläche herum zu erzeugen, wobei die Reaktivität des Nitriermediums aus der Gasionisierung stammt.

7. Verfahren nach Anspruch 1, wobei der Diffusionsverzinkungsprozess das Erwärmen der Befestigungen zusammen mit einem Zinkpulver umfasst, wobei die Pulvergröße im Bereich von 5-80 µm liegt, wobei in einem Diffusionsprozess eine Zinklegierung ausgebildet wird, um auf markante Weise eine deutliche Erhöhung der Korrosionsbeständigkeit zu schaffen.

8. Verfahren nach Anspruch 7, wobei die Diffusionsverzinkung in einer rotierenden Trommel stattfindet.

9. Verfahren nach Anspruch 7 oder 8, wobei der Diffusionsverzinkungsprozess in einer nicht-oxidierenden Atmosphäre durchgeführt wird.

10. Verfahren nach Anspruch 9, wobei die nicht-oxidierende Atmosphäre Stickstoff umfasst.

11. Verfahren nach einem der Ansprüche 7-10, wobei der Diffusionsverzinkungsprozess über eine ausreichend lange Zeit durchgeführt wird, um sicherzustellen, dass aus der Oberfläche, einwärts zum Kern, voneinander getrennte Regionen - die gemeinhin als Diffusionsschichten von Zinkeisenlegierung bezeichnet werden.

12. Verfahren nach einem der Ansprüche 7-11, wobei das Verfahren bei Temperaturen zwischen 340 und 500 °C für einen Zeitraum zwischen 30 Minuten und 180 Minuten durchgeführt wird.

13. Verfahren nach einem der Ansprüche 7-11, wobei der Diffusionsprozess bei Temperaturen unter 300 °C für einen Zeitraum zwischen 30 Minuten und 360 Minuten durchgeführt wird, wobei das Zinkpulver sublimiert wird.

14. Verfahren nach einem der Ansprüche 7-13, wobei das Beschichtungspulver eine Anzahl von Additiven umfassen kann, die ausgewählt sind aus einem Bereich, der Zink, Zinn, Eisen, Aluminium, Magnesium beinhaltet, wobei die Pulver in einem Prozentbereich von 0,1-5 % des Pulvergesamtgewichts bereitgestellt werden, um weitere günstige Eigenschaften bereitzustellen, wobei die Pulvergröße im Bereich von 5-80 µm liegt.

15. Verfahren nach einem der Ansprüche 7-13, wobei das Beschichtungspulver ein Tonmaterial sein kann, beispielsweise Kaolin (Al₂O₃ • 2SiO₂) mit einer Pulvergröße von etwa 10 µm.

16. Fixiervorrichtung, die gemäß einem oder mehreren der Ansprüche 1-15 hergestellt wird.

## Revendications

1. Un procédé de fabrication d'un dispositif de fixation destiné à la fixation sur du béton et des substrats similaires, le procédé comprenant :
a) la sélection d'un acier pouvant être traité à chaud servant à la formation du dispositif de fixation ;
b) le roulage de l'acier pour former un produit de fixation ;
c) l'application d'un procédé de nitruration pour pénétrer la surface de l'acier, ce qui permet de créer une peau de surface ; et,
d) l'application d'un procédé de diffusion de shérardisation afin d'augmenter la résistance à la corrosion.

2. Un procédé selon la revendication 1, dans lequel l'acier présente une faible teneur en silicium.

3. Un procédé selon la revendication 1, dans lequel l'acier est de l'acier 34CrMo4.

4. Un procédé selon la revendication 1, dans lequel l'acier est roulé dans une matrice de formage à froid composé des premier et deuxième éléments de matrice ; chaque élément de matrice étant disposé l'un par rapport à l'autre de sorte que les gorges définies dans un premier élément de matrice sont positionnées de sorte que, lors de l'utilisation, les matrices sont animées d'un mouvement alternatif dans des plans parallèles l'une par rapport à l'autre, l'acier est roulé pendant que les éléments de matrice sont amenés ensemble à proximité, ce qui permet aux éléments verticaux correspondants dans l'acier de s'accoupler avec les gorges correspondantes sur le second élément de matrice.

5. Un procédé selon la revendication 1, dans lequel le procédé de nitruration comprend un procédé de nitruration par gaz conduit à une température d'environ 520 °C, pour fournir un procédé de traitement « thermochimique » à faible distorsion.

6. Un procédé selon la revendication 1, dans lequel le procédé de nitruration comprend un procédé de nitruration par plasma dans lequel des champs électriques intenses sont utilisés pour générer les molécules du gaz ionisé autour de la surface à nitrurer, la réactivité du milieu de nitruration découlant de l'ionisation du gaz.

7. Un procédé selon la revendication 1, dans lequel le procédé de diffusion de shérardisation comprend le chauffage des dispositifs de fixation qui sont chauffés ensemble avec une poudre de zinc, la taille de la poudre étant dans la plage de 5 à 80 µm, ce qui permet un alliage de zinc de se former dans un procédé de diffusion pour fournir de façon nette une augmentation significative de la résistance à la corrosion.

8. Un procédé selon la revendication 7, dans lequel la diffusion de shérardisation prend place dans un fût tournant.

9. Un procédé selon la revendication 7 ou la revendication 8, dans lequel le procédé de shérardisation est effectué dans une atmosphère non oxydante.

10. Un procédé selon la revendication 9, dans lequel l'atmosphère non oxydante comprend de l'azote.

11. Un procédé selon une quelconque des revendications 7 à 10, dans lequel le procédé de diffusion de shérardisation est effectué sur une période de temps suffisante pour garantir, à partir de la surface vers l'intérieur du coeur, des régions distinctes - communément appelées couches de diffusion d'alliage zinc-fer.

12. Un procédé selon une quelconque des revendications 7 à 11, dans lequel le procédé est effectué à des températures comprises entre 340 et 500° C pendant une période entre 30 minutes et 180 minutes.

13. Un procédé selon une quelconque des revendications 7 à 11, dans lequel le procédé de diffusion est effectué à des températures au-dessous de 300°C, pendant une période entre 30 minutes et 360 minutes, dans lequel la poudre de zinc se sublime.

14. Un procédé selon une quelconque des revendications 7 à 13, dans lequel le revêtement en poudre peut comprendre un certain nombre d'additifs, sélectionnés à partir d'une gamme comprenant le zinc, l'étain, le fer, l'aluminium, le magnésium, ce qui permet de fournir davantage de propriétés bénéfiques, lesdites poudres étant fournies dans une fourchette de 0,1 à 5 % du poids total de la poudre, la taille de la poudre étant dans la plage de 5 à 80 µm.

15. Un procédé selon une quelconque des revendications 7 à 13, dans lequel le revêtement en poudre peut comprendre un matériau argileux, tel que le kaolin (Al₂O₃• 2SiO₂) comportant une taille de poudre d'environ 10 µm.

16. Un dispositif de fixation fabriqué conformément à une ou plusieurs des revendications 1 à 15.
